# EUROPEAN PATENT SPECIFICATION

(11) **EP 3 300 034 B1**
(45) Date of publication and mention of the grant of the patent: **05.01.2022**
(21) Application number: 16199139.3
(22) Date of filing: 16.11.2016
(51) Int. Cl.: G07C 9/00, G06K 7/10, G07C 9/22, G07G 1/00, G07C 11/00

(54) **MODULAR SCANNING APPARATUS FOR ACCES MANAGEMENT**
MODULARE ABTASTVORRICHTUNG FÜR ZUGANGSVERWALTUNG
APPAREIL DE BALAYAGE MODULAIRE POUR LA GESTION D'ACCÈS

(43) Date of publication of application: 28.03.2018
(73) Proprietor: QuiAccess comm.v, 9290 Overmere (BE)
(72) Inventor: Joos, Stefaan, 9290 Overmere (BE)
(74) Representative: BiiP cvba

(56) References cited:
- US-A- 5 478 998
- US-A1- 2003 034 394
- Anonymous: "Access control - Wikipedia", , 8 November 2016 (2016-11-08), XP055370784, Retrieved from the Internet: URL:https://web.archive.org/web/2016110803 0226/https://en.wikipedia.org/wiki/Access_ control [retrieved on 2017-05-09]

## Description

### TECHNICAL FIELD

The present disclosure generally relates to a scanning apparatus and more particularly relates to a modular scanning apparatus for use in access management.

### BACKGROUND

In today's world, various enterprises and organizations often serve as hosts to visitors, for example, workers, vendors, partners, clients, members, colleagues, employees, students, etc., for a variety of purposes. Organizations of all sizes and in all industries require a means for monitoring access to their premises by these visitors.

Traditional access management systems often included keys, identification badges, passwords and / or personal identification numbers printed on the paper, or the like could be easily duplicated. Such systems may simply rely on visitors to record their own details before entry and note the time of exit. Further, such systems also required one or more staff members overseeing access to the premises. Contradistinctively, electronic authentication relies on one or more unique immutable codes on smart phone / cards that are not susceptible to such issues. Electronic authentication, therefore, provides a superior level of security, convenience and ease of use.

Barcode scanners are well known for their usefulness in access management. Such scanners may be wall mounted or hand-held. While hand-held scanners are not preferable due to the requirement of a dedicated employee for managing the access while being a time taking process, the wall mounted scanners are generally preferred.

However, there are certain disadvantages associated with wall mounted scanners as well. For example, the angle at which the scanners are to be declined needs to be set each time, according to the user and therefore, a cumbersome job.

Further, these scanning apparatus are generally connected to a local computer / processing device therefore, are generally large, heavy, and bulky for being a stand-alone access management, thereby resulting in difficult and expensive transportation.

The document US 2003/034394 A1 describes an optical reader comprising a housing and an imaging module in the housing. The imaging module comprises a plurality of printed circuit boards connected in a stacked configuration to a first printed circuit board carrying an image sensor.

The document US 5 478 998 A describes a wall mountable, adjustable tilting bar code scanner having a scanning portion extending out of its housing.

Recently, there had been some wall mounted scanning apparatus available having an internal processor which can simply be mounted on the wall and connected to the locks etc to be managed for access. However, the present inventors have recognized some disadvantages with such improvised wall mounted scanners. For example, when a scanner fails, malfunctions, or otherwise needs to be replaced, such replacement is relatively difficult and time consuming, as it may involve: either replacing the complete apparatus or disassembling the complete unit and each of the sub portions. Similarly, in some instances, the communication interface of the apparatus may be required to be changed from one mode to other. For example - converting the apparatus from a wired to a wireless communicating unit, and / or vice versa.

Apart from the structure of the apparatus, recently there have been concerns related to functionalities of the apparatus. For example, where a single printed circuit board (PCB) based scanning apparatus having limited associated functionality would have been acceptable in an initial design, a follow-on product may be expected to integrate more functionalities, requiring more complex printed circuit boards. Moreover, while a print board for an initial product may be a luxury in terms of space, the later products may have design constraints calling for smaller PCB (along with additional functionality). Alternatively, sometimes, it is desired that the PCB is modified to change the application of the apparatus, for example, converting the apparatus from a standalone unit to non-standalone, and vice versa. In such situations, the PCB needs to be modified to support the new application. Thus, finding a way to fit to allow such a modification within a given space may be useful.

Therefore, there is a need in the art for a wall mounted scanning apparatus which may be easy to operate, small in size, and having a circuitry that may be easily changed / upgraded / modified, whenever required.

### SUMMARY

In one aspect of the present disclosure, a scanning apparatus for managing access through one or more connected locks according to claim 1 is provided. The apparatus includes a housing unit having a top plane, a bottom plane and two substantially parallel and opposing sidewalls defining an interior portion there between. The housing unit further comprises a cavity within at least one of the wall so as to allow a scanning portion of a scanning unit placed within the housing unit to extend out of the cavity in an angular position. This enables the apparatus to scan a substantially horizontal plane under an angle between 1° to 89° and preferably between 5° and 45°. The apparatus further comprises a scanner assembly mounted within the housing unit. The scanner assembly comprises a base scanner interface board connected to the scanning unit using an interface connector. The base interface is further connected to a connector board having a power interface board for providing power to the scanning apparatus. The connector board is further connected to at least one of a plurality of individual functionality print boards for providing individual functionality to the scanning apparatus. The housing unit comprising the scanner assembly may be mounted on a wall or any supporting surface through a mounting assembly.

Preferably the supporting surface is an electronic gag box and the mounting assembly is a snap fit lock configured to lock the scanning apparatus within the electronic box.

Alternatively, the supporting surface is a wall surface and the mounting assembly is a screw mechanism for mounting the scanning apparatus onto the wall surface.

Generally, the connector board comprises a plurality of first kind of electronic connectors for connecting to one or more of the plurality of individual functionality print boards.

Further, each of the plurality of individual functionality print-boards comprises a second kind of electronic connectors for connecting to the connector board such that the first kind of connector and second kind of connector fixedly and operably connects the individual functionality board to the connector board.

Possibly the first kind of the electronic connector is a male pin header.

Further possibly, the second kind of electronic connector is a female pin socket.

Optionally, the plurality of print board comprises an intelligence board for enabling a standalone functionality of the scanning apparatus.

Generally, the intelligence boards comprises a programmable logic for decrypting a scanned input received from the scanning unit thereby checking if a user from which the scanned input is received is allowed to access through one or more connected locks.

Additionally, the plurality of print board comprises a power-feed board for providing power to apparatus and/or other individual functionality components.

Optionally, the feed board may comprise a relay for unlocking the locks.

Further, optionally, the plurality of print board comprises one or more communication board for communicating with the one or more locks to be managed for access.

The communication board may be selected from one or more of but not limited to RS232, RS485, WIEGAND, RS422, 12C, ABA TK2, ISO2, WIRELESS IEEE 802.15.4 (6LOWPAN, ZIGBEE, Z-WAVE), BLUETOOTH, GPRS, WIMAX, WIFI .

Yet further, optionally, the communication board may connect the apparatus to an access management system such that the apparatus provides an input to the access management system, which in turn controls an access through the connected locks.

Generally, the scanning unit is a bar-code scanning unit comprising a motion sensor based activation mechanism.

In a non claimed aspect ef the disclosure provides a method for managing an access through one or more locks using a modular scanning apparatus. The method includes scanning an input such as a barcode, from a user using a scanning unit. The method further comprises processing the scanned input to verify the authorization of a user to access through the connected locks.

Generally, the processing comprises decryption of the scanned barcode.

Preferably, the processing is performed by an intelligence board present within the scanning apparatus.

Alternatively, the processing is performed by a remote access management system connected to the apparatus.

Generally, the apparatus communicates with the access management system via one or more communication boards including but not limited to RS232, RS485, WIEGAND, RS422, 12C, ABA TK2, ISO2, WIRELESS IEEE 802.15.4 (6LOWPAN, ZIGBEE, Z-WAVE), BLUETOOTH, GPRS, WIMAX, WIFI.

The details of one or more implementations are set forth in the accompanying drawings and the description below. Other aspects, features and advantages of the subject matter disclosed herein will be apparent from the description, the drawings, and the claims.

### BRIEF DESCRIPTION OF THE DRAWINGS

FIG. 1 is a block diagram of a scanning apparatus, in accordance with one embodiment of the present disclosure;
FIG. 2 is a block diagram of the scanning apparatus, in accordance with another embodiment of the present disclosure;
FIG. 3 is a planar view of a housing unit, in accordance with an embodiment of the present disclosure
FIG. 4 is a schematic view of the scanner assembly, in accordance with one embodiment of the present disclosure;
FIG. 5 is a schematic view of a top surface of scanner interface board, in accordance with another embodiment of the present disclosure;
FIG. 6a is a schematic view of a top surface of a connector board, in accordance with another embodiment of the present disclosure;
FIG. 6b is a schematic view of a top surface of a connector board, in accordance with another embodiment of the present disclosure;
FIG. 7a is a schematic view of an intelligence board, in accordance with another embodiment of the present disclosure
FIG. 7b is a schematic view of a communication board, in accordance with another embodiment of the present disclosure;
FIG. 7c is a schematic view of a communication board, in accordance with another embodiment of the present disclosure;
FIG. 8 is a block diagram depicting components of individual functionality print-boards, in accordance with one embodiment of the present disclosure
FIG. 9 is a flowchart illustrating steps for allowing an access through one or more locks using the modular scanning apparatus, according to a non claimed embodiment of the present disclosure; and
FIG. 10 is a flowchart illustrating steps for allowing an access through one or more locks using the modular scanning apparatus, according to another non claimed embodiment of the present disclosure.

### DETAILED DESCRIPTION

As required, a schematic, exemplary-only embodiment of the present application is disclosed herein.

Aspects, advantages and/or other features of the exemplary embodiment of the disclosure will become apparent in view of the following detailed description, which discloses various embodiments of the invention. Ir describing exemplary embodiments, specific terminology is employed for the sake of clarity.

The present application discloses a scanning apparatus for scanning an input from a user and thereby verifying its authorization to access through one or more locks. The apparatus comprises a modular print board structure that may be modified by simply adding / removing one or more individual functionality print-boards as required by the apparatus for a desired operation. In an embodiment of the present invention, the apparatus may be used as a stand-alone unit. In another embodiment of the present invention, the apparatus may complement to existing access control systems by providing the scanned input such as a barcode, to the access system, which then takes appropriate action such as automatically unlocking and/or opening a door. It is to be understood that unless otherwise indicated, this invention need not be limited to applications for access management system. As one of ordinary skill in the art would appreciate, variations of the invention may be applied to other possible operations such as point of sale, vending machines, security systems, tracking systems, or the like. Moreover, it should be understood that embodiments of the present invention may be applied in combination with various other security devices and / or systems for various possible applications. It must also be noted that, as used in this specification and the appended claims, the singular forms "a," "an" and "the" include plural referents unless the context clearly dictates otherwise. Thus, for example, the term "an opening" is intended to mean a single opening or a combination of openings, "an electronic connector" is intended to mean one or more electronic connectors of same kind, or a combination of various kinds of electronic connectors thereof.

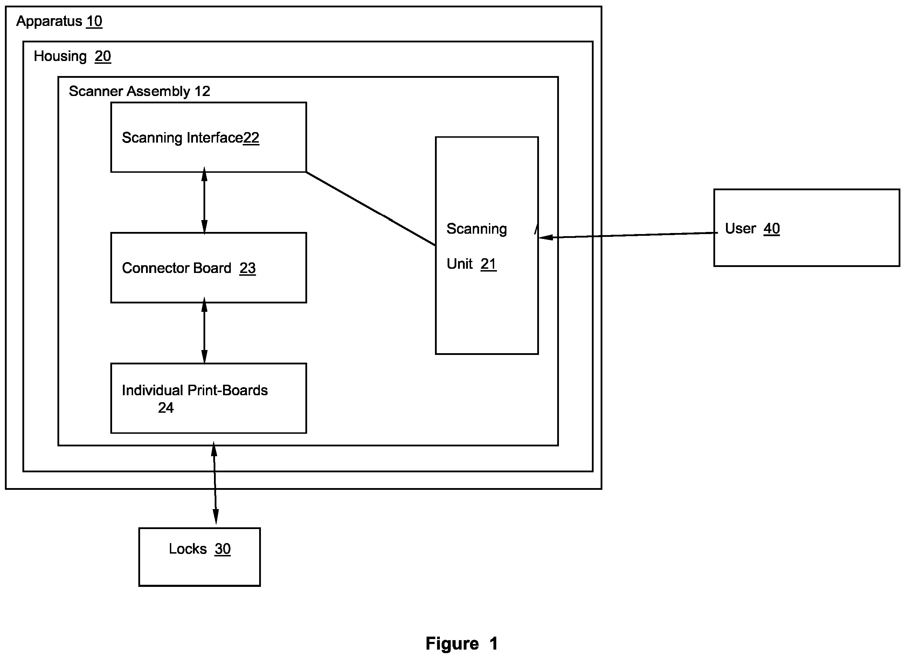

In description of the FIGS. 1-2 that follow, elements common to the schematic system will have the same number designation unless otherwise noted. In a first embodiment, as illustrated in FIG. 1, the present disclosure provides a scanning apparatus **10** to be used for controlling and managing an access through one or more connected locks **30.** The apparatus includes a housing unit **20** for holding a scanning assembly **12.** The scanning assembly **12** includes a scanning unit **21** and a scanning interface board **22** connected to the scanning unit **21.** The scanning interface board **22** is operably connected to a connector board **23.** The connector board **23** is connected to one or more individual functionality print-boards **24,** each print-board **24** associated to a predetermined functionality. The plurality of individual functionality print-boards **24** may comprise an intelligence board and /or other suitable print-boards such as feed-board, memory board, processor board etc. that may be required for processing a scanned input received from the scanning unit **21** thereby providing the apparatus with a stand-alone capability. Further, the plurality of individual functionality print-boards **24** may comprise one or more communication boards for enabling the communication of the scanning apparatus **10** with the one or more locks.

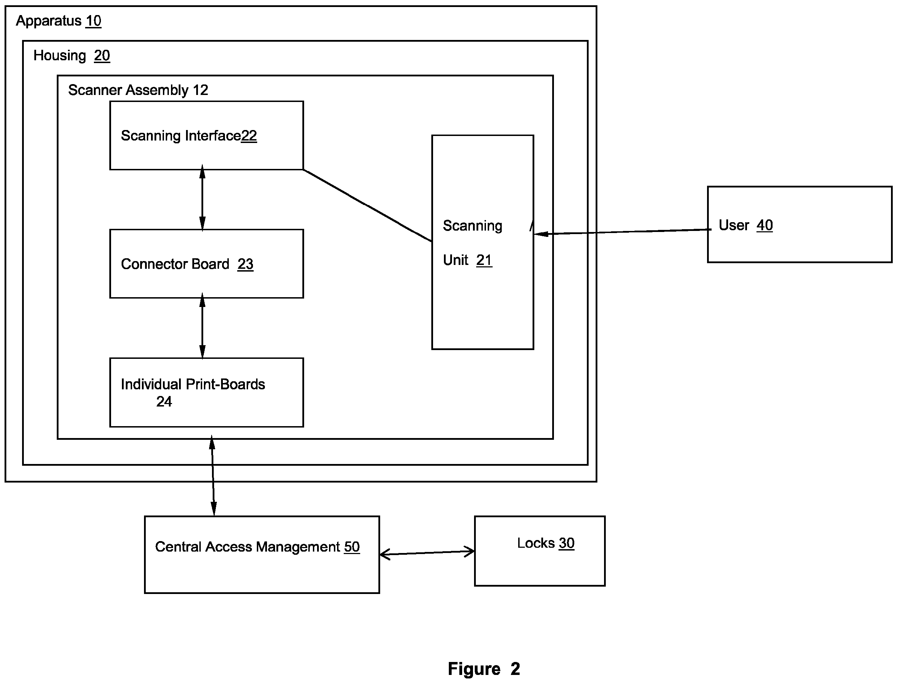

In a modification of the first embodiment, as illustrated in FIG. 2, the apparatus is operably connected to a remote centralized access management system **50** through one or more individual functionality print-board **24** such as a communication board. In such an embodiment, the intelligence board for processing is not generally required as the processing of the scanned input is performed by the access management system. The apparatus **10** in such embodiments scans an input at the scanning unit **21** and communicates the input to the access management system **50,** which thereafter controls the one or more locks to be managed..

FIGS. 1 and 2 schematically show the arrangement of the basic components of the apparatus of the present disclosure. However, in the construction of commercial functional units secondary components such as electronic connectors, buses, cables, capacitors, solders, support structure and other functional components known to one of skilled in the field of print board circuits and the access management systems may be incorporated in the system. Such commercial arrangements are included in the present invention as long as the structural components and arrangements disclosed herein are present.

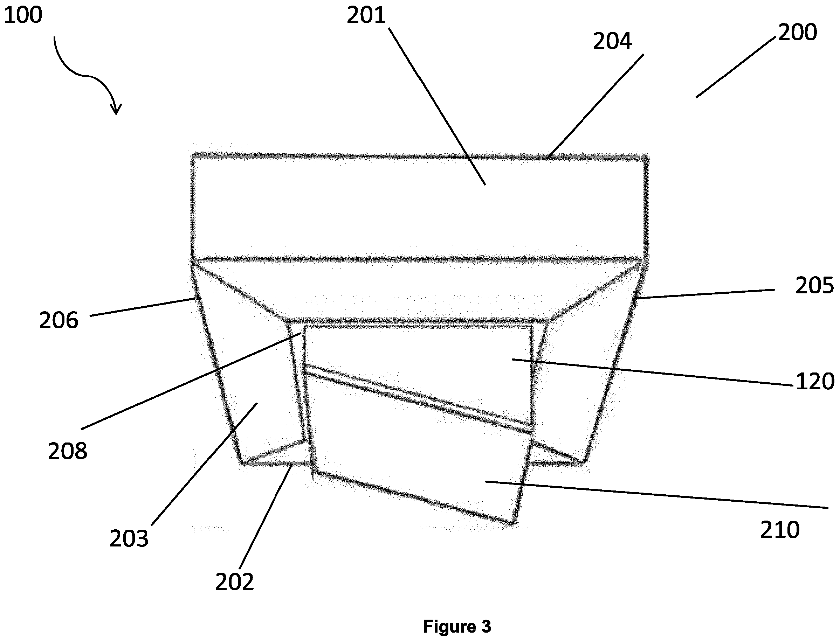

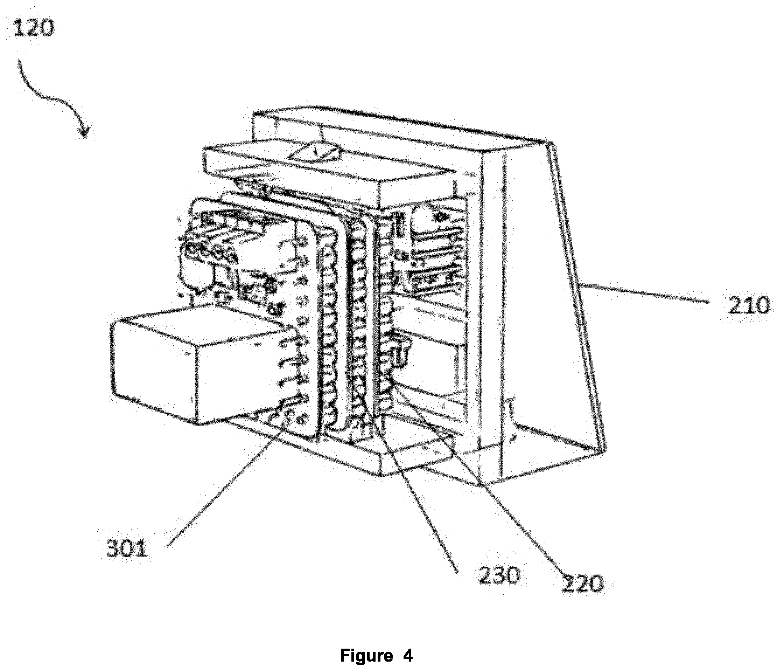

Referring to FIG. 3 and 4, a modular scanning apparatus, generally represented by numeral **100,** is illustrated in accordance with an embodiment of the present disclosure. The scanning apparatus **100** includes a housing unit **200** for holding a scanning assembly **120,** the scanning assembly **120** including a scanning unit **210** connected to a scanning interface board **220.** The housing unit **200** includes a top plane **201,** a bottom plane **202,** a front wall **203,** a rear wall **204** and a pair of substantially opposing and parallel sidewalls **205, 206** defining an interior portion **207** there between. The housing unit **200** further comprises a cavity **208** for enabling an access within the interior portion **207** thereof. The housing unit **200** is configured to hold the scanning assembly **120** in such a way that a scanning portion **212** of the scanning unit **210** extends out of the cavity **208** in an angular position so as to conveniently scan a substantially horizontal plane under an angle of 1° to 89° and preferably between 5° to 45°. Accordingly, a user holding a smart phone / or a smart card comprising a barcode code to be scanned may be easily scanned by the scanning unit **210.**

It will be appreciated by those skilled in the art that the housing unit **200** may be formed in a wide variety of shapes, sizes, and configurations without departing from the present invention. This means that the housing unit **200** has to be sized to well accommodate the installation of the various PCB present within the scanning assembly **120** along with their mounted electronic components.

The housing unit **200** may preferably be formed out of an thermally conductive material such as including but not limited to thermoplastic, resin and metal, using a 3D printing process. Alternatively, the housing unit **200** may be formed using any of the well-known manufacturing processes conventionally known in the art. In some embodiments, generally in instance, where the apparatus **100** has to be used as an external unit exposed to extreme weather conditions, the housing unit **200** may be constructed to be weather and tamper resistant, to provide for greater durability and extend the useful life of the scanning apparatus **100.**

The housing unit **200** comprises a holding mechanism [not shown] for angularly holding the scanning unit **210.** Preferably, the holding mechanism may be a resin holder integrally printed during the process of 3D printing of the housing unit **200.** In such embodiments, the resin holder is generally thermally conductive thereby spreading the heat and also keeping moisture away from the scanning unit **210.** The shape of resin holder may be configured to hold the scanning unit **210** in a tilted position and at a desired fixed angular position. In another embodiments, the holding mechanism may be any suitable holding mechanism such as various locking mechanisms, supporting structures, wrapping mechanisms, etc already known in the art.

In some embodiments, the housing unit **200** may further include one or more means of heat dissipation such as, for example, heat transferring tabs and/or heat spreading member in thermal communication with one or more portions of the housing unit **200** for reducing a thermal gradient over the surface of the housing unit **200.** Alternatively, any suitable mechanism for heat dissipation may be integrated within the housing unit **200.**

The housing unit **200** further comprises a mounting assembly **250** for mounting the housing unit **200** on to a desired surface, such as or example a wall surface, a door, or the like. The mounting assembly **250** may include any suitable mounting mechanism known in the art.

In some embodiments, the housing unit **200** may be shaped so as to receive within an electronic box such that the front wall of the housing sufficiently flushes with the surface surrounding the electronic box. In such embodiments, the mounting mechanism **250** may be a snap-fit mechanism enabling a fixation of the housing unit **200** within the modular electronic boxes. Alternatively, any mounting mechanism that may suitably hold the housing unit **200** within the electronic box may be used. In such embodiment, in some instances the housing unit **200** may not include rear wall **204.**

In some embodiments, the walls **201, 202, 203, 204, 205, 206** of the housing unit **200** may be configured with a number of additional small openings disposed therein to provide access to important components or permit ingress and egress for cables, communication lines, power cords, and the like.

The scanning unit **210** is preferably a scanner configured to read and scan a bar code. A barcode is a machine-readable representation of information in graphic format. Traditionally, a barcode is a series of parallel bars and spaces of varying widths (e.g., a linear barcode or 1D barcode). More recently, there has been an increase in the use of alternatives to the linear barcode, for example matrix codes (e.g., 2D barcodes, QR Code, Aztec Code, Data Matrix) and Optical Character Recognition (OCR) have enjoyed increasing popularity as the technology advances. As used herein, the terms barcode and code symbol are intended in their broadest sense to include linear barcodes, matrix barcodes, and OCR-enabled labels. The scanning unit **210** is typically an optical scanner for scanning barcodes. The scanner may include a laser scanner, for example a solid state or a semiconductor laser including a diode laser. Alternatively, the scanner may be a CCD scanner.

Preferably, the scanning unit **210** may be any conventionally known 2d scanner capable of identifying symbols having data identifying characteristics such as for example, BR Code, QR code, or the like. Further, the scanning unit **210** may support all mainstream 1D as well as PDF417, QR Code (QR1, QR2, Micro QR), Data Matrix and GSI-DataBarTM(RSS) (RSS-Limited, RSS-14, RSS-14 Stacked and RSS-Expand). The scanning unit **210** may further comprise functionalities such as beeping functionality, LED functionality for signaling an execution of a scan operation. Further, the scanning unit **210** may comprise an aiming indicator that can be projected onto a code symbol (e.g., barcode, linear barcode, matrix barcode, letter strings, number strings).

The scanning unit **210** is configured to read a barcode on a barcode carrier [not shown] carried by the user. Barcode carrier may include a document, such as a boarding pass, or an electronic display device capable of displaying barcode, such as a cellular phone or hand-held computer or terminal, including a personal digital assistant, enterprise digital assistant. Barcode carrier may include other types of hand-held barcode display devices such as smart cards, or the like. Accordingly, the scanning unit **210** may have the capability of reading barcodes on virtually any medium - paper, plastic cards, mobile phones and LCD displays.

In a preferred embodiment of the present invention, the scanning unit **210** is preferably a light weight and small space occupying unit configured to be accommodated in a very minimal space for the intended applications and / or space-constrained equipments, such as electric box, or the like.

The operation of the scanning unit **210** may comprise a trigger that can be activated automatically and / or manually. In the manual mode, the trigger may be a button or switch configured onto the body of the scanning unit **210.** In such an embodiment, the manually-actuated trigger when pressed or activated, in turn activates a scanning operation of the scanning unit **210** thereby scanning an object in a scanning field.

The automatic mode of operation may comprise one or more sensor configured within the scanning unit **210** which on detection of a predetermined event, triggers and activates the operation of the scanning unit **210.** In one such embodiment, the scanning unit **210** comprises a motion sensor. The motion sensor may comprise any device or combination of devices or sensors that are capable of detecting motion, light, and/or proximity. The motion sensor may comprise, for example, a sonic or an optical distance measuring sensor such as an Infrared Radiation (IR) sensor providing either analog or digital sensor output, such as the GP2YOA60SZ analog output IR distance measurement sensor or the GP2YOD413KOF digital output IR LED distance measurement sensor, both available from the Sharp Corporation of Osaka, Japan. According to some embodiments, the motion sensor may utilize distance measurement, light sensing, and/or motion detection functionality to detect the presence of a user and / or barcode carrier in proximity to the scanning apparatus **100.** Upon such detection, the scanning unit **210** may be triggered and / or activated.

In some embodiments, the scanning unit **210** may optionally include one or more additional sensors, for example, a distance measuring and/or other proximity sensor similar to the motion sensor or any other sensor or combination of sensors operable to detect the presence of a user.

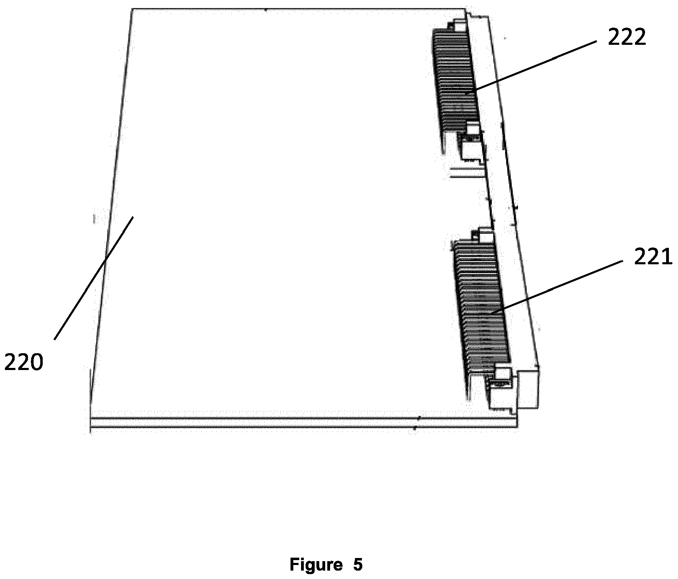

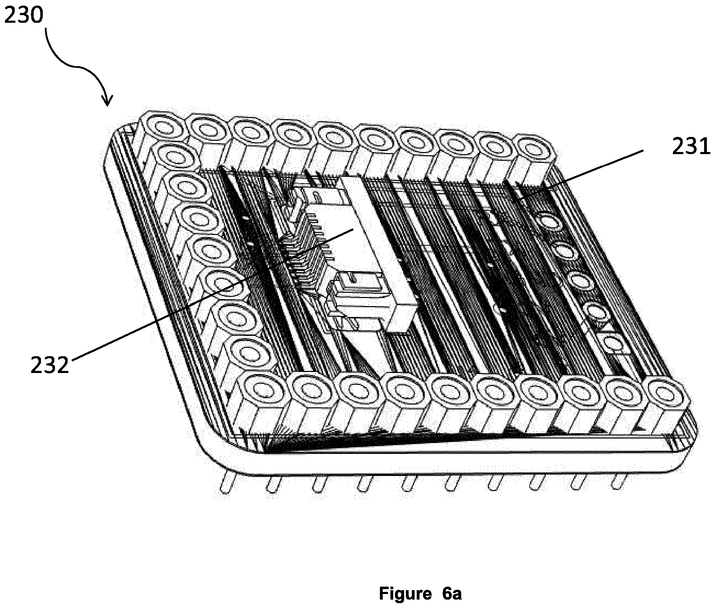

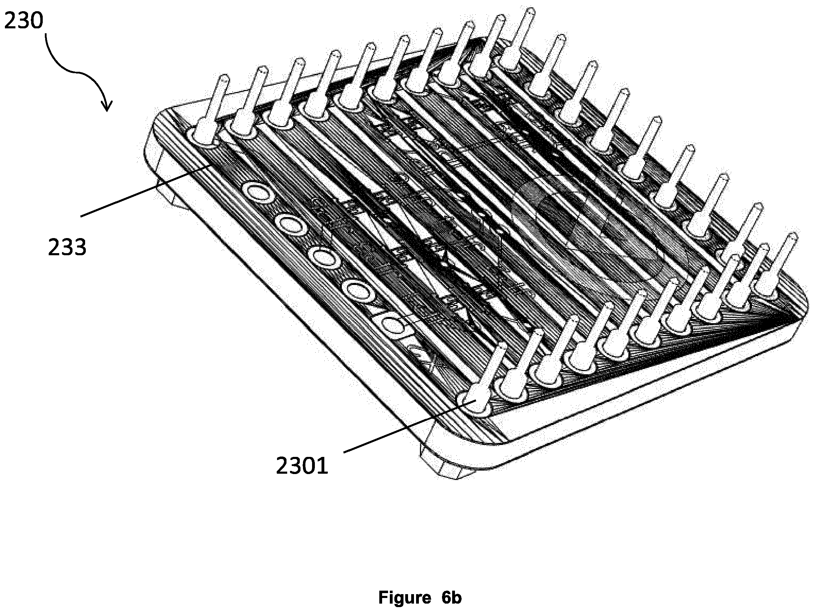

As depicted in fig. 4, and as mentioned earlier, the housing unit **200** further includes the scanning assembly **120.** The scanning assembly **120** comprises a scanning interface board **220** as illustrated in fig. 5. The scanning interface board **220** is a hardware board such as a PCB, on which various components such as integrated circuits (ICs), capacitors, inductors, computing-based devices, and switches may be coupled to one another in one or more circuits. The scanning interface board further comprises at least one interface connector configured thereon for example, as illustrated in fig. 3, a first interface connector **221** and a second interface connector **222.** In some embodiments, the first interface connector **221** and the second interface connector **222** may be provided as female edge connector type of connectors. In an embodiment of the present invention, the first interface connector **221** connects the scanning interface board **220** to the scanning unit **210.** Further, the second interface connector **222** may connect the scanner interface board **220** to a connector board **230** at a bottom surface **231** thereof, illustrated in fig. 6a. The bottom surface **231** of the connector board **230** comprises a third interface connector **232,** preferably a male edge connector kind of interface connector, connectable to the second interface connector **222** of the scanner interface board **120.** The connector board **230,** illustrated in fig. 6a and 6b comprises a plurality of first kind of electronic connectors **2301** configured onto a top surface **233** thereof. Further, the top surface **233** of the connector board **230** may comprise various components such as integrated circuits (ICs), capacitors, inductors, computing-based devices, and switches may be coupled to one another in one or more circuits.

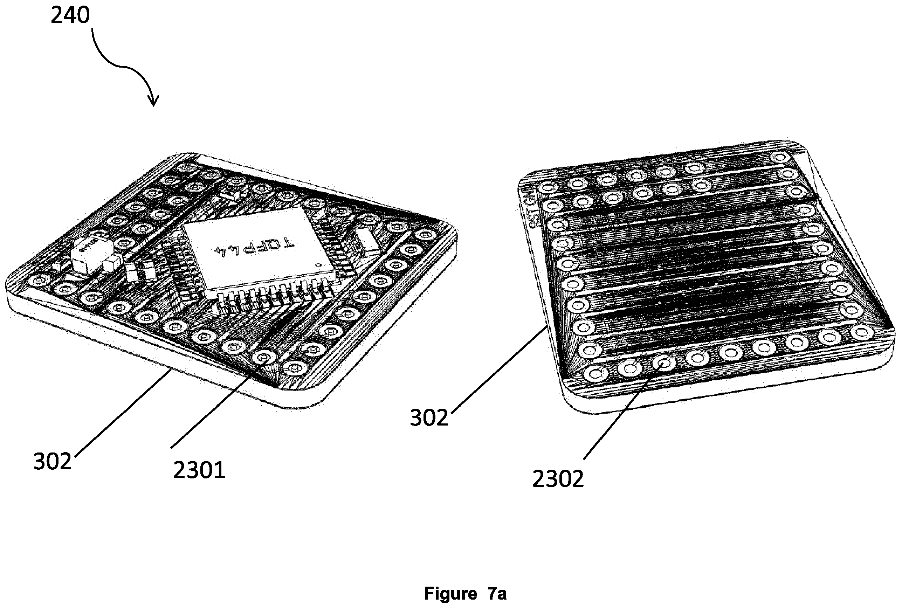

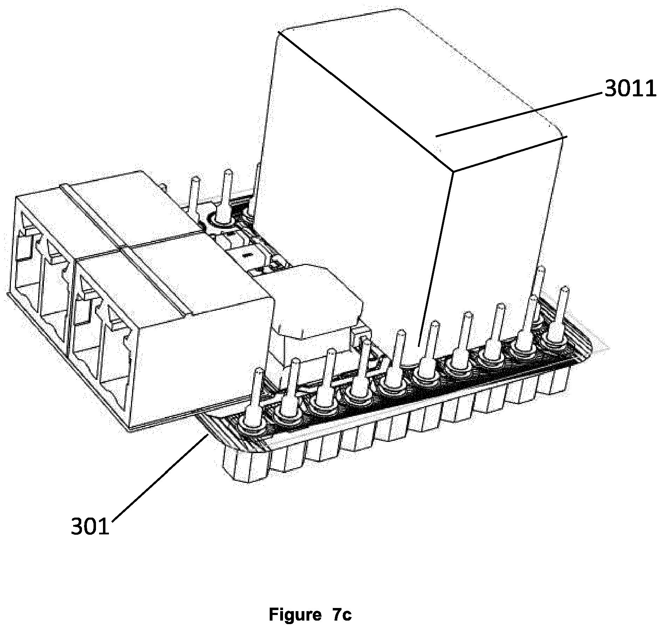

The connector board **230** is configured to be connected to a plurality of individual functionality print boards **240** via a second kind of electronic connectors **2302** configured on a bottom surface of each of the individually functionality print-boards **240.** In an embodiment of the present invention, the first kind of electronic connector **2301** may be a plurality of pin headers and the second kind of electronic connectors **2302** may be female pin socket type electronic connectors capable of fixedly receiving the male pin header type of electronic connectors. In another embodiment as illustrated in Fig. 7a, in reference to an intelligence board individual functionality board, the first kind of electronic connector **2301** is a female pin socket and the second kind of electronic connector **2302** may be a male pin header. The use of pin header and corresponding pin socket based electronic connectors can help to standardize the connection between the printed circuit-boards such that a possibility of misconnection is eliminated. Further, the use of the pin header also helps to reduce manufacturing time by eliminating time-consuming single pin press-fit insertion of pins into the printed circuit boards. However, in other embodiment of present invention, any suitable and mutually complimentary electronic connectors, known in the art may be used for connecting the connector board **230** to the individual functionality boards **240.**

Each of the individual functionality print-boards **240** comprises the first kind of electronic connectors **2301** on a top surface thereof and second type of electronic connectors **2302** on the bottom surface thereof, Such an arrangement enables a possibility of stacking of individual functionality print-boards **240** on top of each other via mutually co-operating and complimentary first kind of electronic connectors **2301** and the second kind of electronic connectors **2302.** Alternatively, the first kind of electronic connectors **2301** as well as the second kind of electronic connector **2302** may both be electronic connector slot for receiving one or pin header such that one end of pin header is accommodated within the first electronic connector slot **2301** and the other end of the pin header is accommodated within the second electronic connector slot **2302.** Accordingly, a stack of individual functionality print-board **240** may be formed onto the connector board **230.**

Each of the individual functionality print-board **240** comprises various components such as integrated circuits (ICs), capacitors, inductors, computing-based devices, and switches that may be coupled to one another in one or more circuits, and is associated to a predetermined functionality. Such a modular multicomponent stack provides a possibility of combining several discrete functional components, in the form of print-boards having individual functionalities, or assorted stacks of print-boards having various functionalities.

The connector board **230** may further be connected to a power feed board **301** illustrated in Fig. The power feed board is a hardware board comprising one or more power sources such as for example a 12v battery, an electric plug, or any other kind of other suitable power source for providing power to the scanning unit **210.** Additionally, the power feed board **301** may provide power to any of the individual functionality board **240** requiring power or battery to operate. The connection between the power feed board **301** and the connector board **230** is similar to the connection between the connector board **230** and the individual functionality boards **240.** Accordingly, in a preferred embodiment, the power feed board **301** comprises a plurality of complimentary female pin socket on a bottom surface thereof connectable to the pin header configured on the top portion **232** of the connector board **230.** In an embodiment, the power feed board **301** may be configured to provide power to the locks for locking / unlocking purpose. In such embodiments, the power feed board **301** may comprise one or more relay switches **3011** for controlling the switching of the one or more locks between an ON and / or OFF position. Accordingly in such embodiments, the power feed board **301** provides power for the operation of the relay switches **3011** which in turn is operably connected to the one or more locks.

In an embodiment of the present invention, preferably within the embodiment, where a standalone application of the scanning apparatus **100** is desired, the individual functionality print board **240** comprises an intelligence board **302** illustrated in fig. 7a. The intelligence board **302** may be a microcontroller, a micro-processor, a programmable logic device (PLD or FPGA) or any other chip whose operating system is embedded within the hardware containing it. The intelligence board **302** is preferably a programmable chip in which an initial decryption coding algorithm is programmed using a code generation program already known in the art. In use, the intelligence board **302** receives a scanned input such as a barcode, from the scanning unit **210.** The scanned input is then processed by the programmable logic encoded within the intelligence board **302.** The intelligence board **302** may further comprise one or more supporting devices such as, for example, a micro controller or a non volatile external memory (EEPROM or other) for implementation of the basic functionalities. Alternatively, the supporting devices may be present within the apparatus as individual functionality board stacked on the connector board **230.** In such embodiments, the intelligence board **302** is configured to communicate with the supporting functionality print-boards for processing and / or decryption the scanned input such as the barcode. Further, in such embodiments, the connector board **230** may comprise additional individual functionality print boards **240** such as for example, a memory and an auxiliary controller.

Programmable logic devices (PLD) may include, for example, a computer programmable logic device (CPLD), a field-programmable gate array (FPGA), a programmable array logic (PAL), a generic array logic (GAL), a static random access memory (SRAM), an erasable programmable read-only memory (EPROM), and an electrically erasable programmable read-only memory (EEPROM). Programmable logic devices are connected to each other using data and control buses which may include a programmable logic device bus, such as a high speed bus. The PLD generally carries its own unique digital identifier (UDI) that is programmed into it by the manufacturer. Once a UDI is written into a PLD at the end of PLD manufacturing, the UDI cannot be rewritten. A UDI, therefore, uniquely identifies a particular PLD. In an embodiment, the programmable logic is an FPGA such as belonging to Virtex family FPGA available from Xilinx, Inc. of 2100 Logic Drive, San Jose, Calif. 95124.

Further, in such embodiments, where the intelligence board is used to provide standalone functionality to the apparatus, a real time clock board **303** may be provided to provide a real time clock upon which the PLD operates. In an embodiment, the real time clock may be used to clock, among other things, the PLD, along with supporting devices and/or one or more input devices and/or output devices.

In an embodiment, the real time clock may be configured to provide one or more of a variety of real-time and/or timestamp information to the PLD. Such a real time clock may be preferred in instances, where authorization is also related dependent on clock based parameters such as specific time, date, or the like

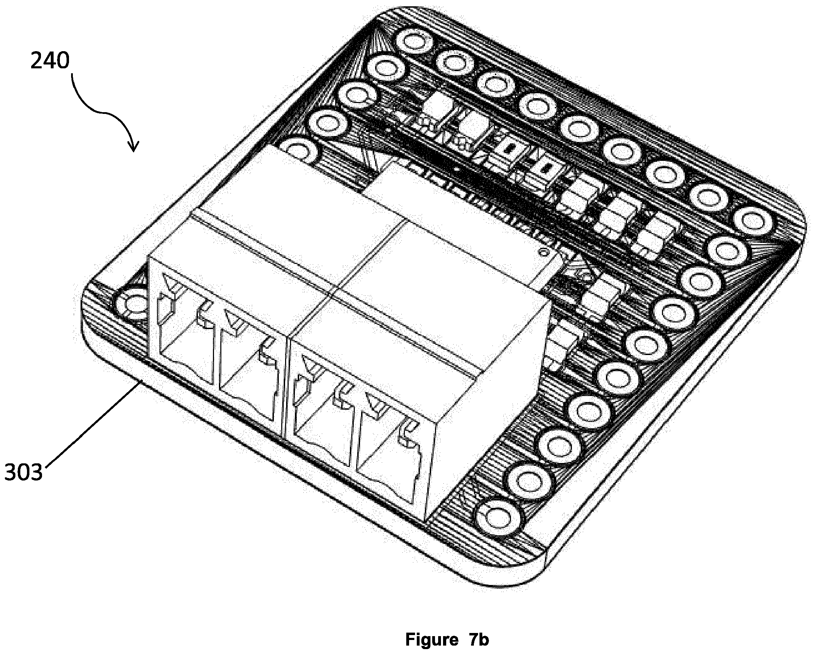

The plurality of individual functionality print board **240** further comprises one or more communication board **303,** illustrated in fig 7b, for enabling a communication within the apparatus **100** and / or one or more locks and / or to external system such as for example a remote centralized access management system **250.** In an embodiment of the present invention, the communication board **303** may be a RS232 communication print board comprising an RS232 communication interface. In another embodiment of the present invention, the communication board **303** may be a RS485 communication board having an RS485 type of communication interface. In yet another embodiment of the present invention, the communication board **303** may be selected from one or more of but not limited to a communication functionality supporting an interface of the type RS422, Wiegand, 12C, ABA TK2, ISO2, wireless IEEE 802.15.4 (6Lowpan, ZigBee, Z-WAVE), Bluetooth, GPRS, WIMAX, WIFI, or the like. In use, the Wiegand communication interface is generally utilized for receiving the scanned input from the scanner unit. The wired communication interfaces such as RS232, RS485. RS422 allows communication with the external systems and / or the locks using a wired line. The wireless communication interface such as Bluetooth , IEEE 802.15.4, GPRS, allows a communication with the external systems and / or locks without using any wired line. In the embodiments, in which, the communication interface requires wireless internet facility to be operated, the apparatus **100** may include one or more of individual functionality board **240** comprising devices such as for example, an antenna, SIM card, wireless BLUETOOTH transmitter/receiver, or the like, which in turn may provide a capability of connecting to the internet. For example, a sim-card slot in one embodiment may enable a possibility of connecting to a mobile network such as 2g/3g, or the like in a situation where no internet connection is available. The communication interfaces provided by the communication board **303** may connect the apparatus **100** to the one or more locks and / or the remote access management system with the help of one or more built-in software interface.

In some embodiments, the connector board **230** may comprise various other kind of individual functionality boards **240** for use in implementation of the access management process using the scanning apparatus **100.** Example of such individual functionality boards **240** include but not limited to one or more of radio boards, video boards, humidity sensor boards, temperature sensor boards, general purpose processor boards, special purpose processor boards, input/output (IO) boards, sensor/actuator boards, global system for mobile communications (GSM) radio boards, alarm sensor boards, or any combination thereof. Further, each of the individual functionality boards may comprises input / output interfaces, communication mediums etc to communicate with in the apparatus. Such structural components are already known in the art and may be used without deviating from the scope of the disclosure.

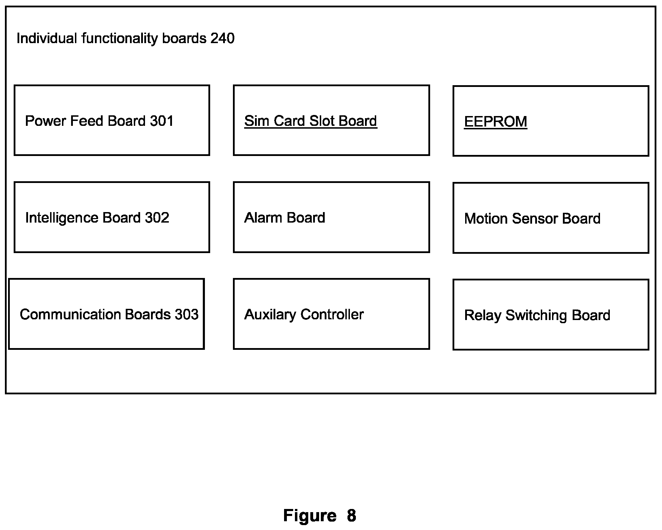

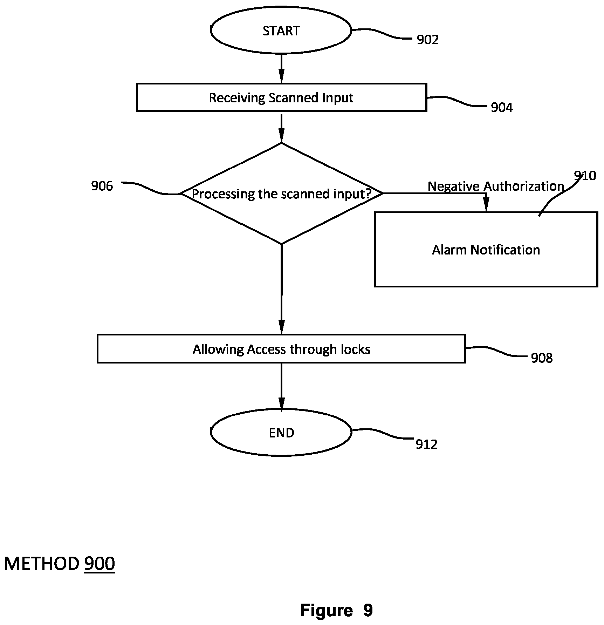

Fig.9 with reference to Figs.1 through 8, is a flow diagram illustrating a method 900 of managing for controlling access using modular scanning apparatus **100.** The method starts at step 902 and proceeds to step 904 where the scanning unit **210** scans an input, preferably a barcode present on a barcode carrier, from a user. In general, the scanning unit **210** gets activated when the motion sensor comprised within the scanning unit **210** senses the proximity of a user. The method then proceeds to step 906 where the scanning unit **210** then communicates the scanned input to the scanner assembly **120** where it is received at the intelligence board **302.** The intelligence board **302** processes, and generally decrypts the scanned barcode to verify the access authorization. The authorization is generally provided beforehand by an administrator by following steps: (i) When a user is allowed an access, an authorization code is generated for a particular PLD contained within the intelligence board **302** of the apparatus 100. Such an authorization code is generated using a code generation software known in the art. Generally such a code is generated base on a unique device identifier (UDI) for the target PLD, the UDI being configured to identify the PLD. (ii) The authorization code is then encrypted using any suitable encryption scheme known in the art. In a preferred embodiment, the apparatus uses AES 128 encryption algorithm in which the authorization code is encrypted using a secret key such that the user cannot decipher the information. contained within it. (iii) The encrypted code is than imprinted / transferred to a suitable barcode carrier and provided to the user for authorizing an access.

Looping back to the step 906, where the scanned barcode is received at the intelligence board **302.** The PLD present at the intelligence board **302** then decrypts the bar-code and verifies if the UDI portion of the authorization code matches the UDI read from the PLD. In some embodiments, the PLD may be processed with user information, time slot etc at which the user may be authorized to access In such instances, when the user tries to access, the PLD in addition to the authorization code also verifies the information to check if the access is authorized during a certain time period. If the authorization is verified as positive the method proceeds to step where the apparatus sends a command using one or more communication interface present within the apparatus to the one or more locks for a desired action. For example, in some embodiments, If the verification outcomes as positive, the method proceeds to step 908 where the apparatus **100** a signal from the power board **301** is sent to the relay switch **3011,** which in turn unlocks the one or more connected locks and provides the user an access there through.

If however, the authorization is not verified and results in negative, the method proceeds to step 910, where an alarm may be notified to notify such an error.

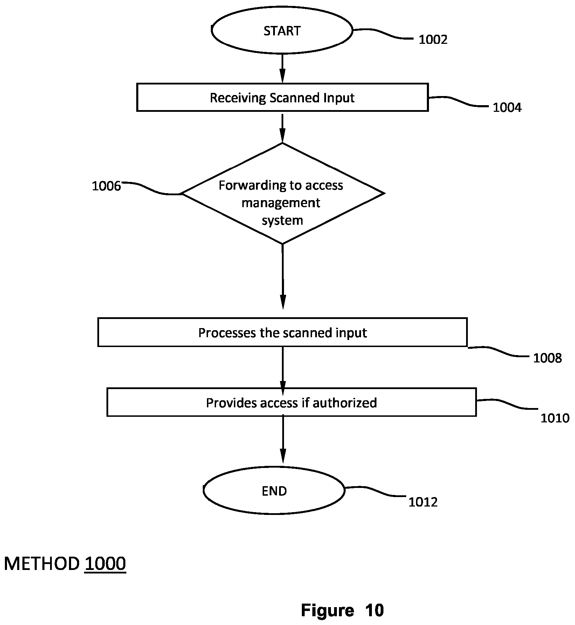

Fig.10 with reference to Figs.1 through 8,is a flow diagram illustrating a method of managing for controlling access using modular scanning apparatus **100** in an embodiment where the apparatus complements to the remote central access management system. The method starts at step **1002** and proceeds to step **1004** which is same as the step **904** of the method **900.** At step **1006,** the scanning apparatus **100** then communicates the scanned input such as barcode, to the scanner assembly **120** which in turn forwards the scanned input to the remote central access management system **250** using any of a desired communication interface present within the apparatus. At step **1008,** the remote system then processes and / or decrypts the scanned barcode, checks for an authorization to access and thereafter at step **1010** follows with one or more actions as may be determined by the operation guidelines of the access management system.

Accordingly, the apparatus 100 may be used for managing an access through one or more connected locks using the apparatus of the present disclosure. Further, the apparatus **100** is be a modular structure which may be upgraded with additional functionalities on the by adding and / or removing any of the individual functionality boards **240** associated to predetermined functionalities.

### INDUSTRIAL APPLICABILITY

The present disclosure relates to a scanning apparatus **100** for scanning an access information such as a barcode / QR code, or the like from a user's mobile and / or smart card and / or document. Accordingly, the current apparatus may be used for access management, as a standalone unit, or in combination with a remote central access management system. The scanning apparatus **100** comprises a plurality of communication media enabling the communication with locks and/or central access management system. For example, in some embodiments, the communication may be performed using wired media such as using RS232 interface, RS485 interface. The scanning apparatus **100** of current invention is a modular unit which allows, removal, update and / or addition of one or more functionality by simply addition / removal of associated functionality board from the stack of the individual functionality board.

In a preferred commercial execution embodiment, the apparatus **100** of the current disclosure may be provided as a conveniently small housing based standalone access management apparatus. In such an embodiment, the apparatus includes a modular housing unit for holding a scanning assembly. The scanning assembly includes a motion sensor activation based scanning unit connected to a scanning interface board wherein a scanning portion of the scanning unit extends out of the housing in an angular position so as to conveniently scan a substantially horizontal plane under an angle of 1° to 89° and preferably between 5° to 45°. Accordingly, a user holding a smart phone or a smart card or any suitable barcode carrier comprising a barcode may get it easily scanned by the scanning unit.

The scanning interface board is further connected to a connector board. The connector board is connected to an intelligence board individual functionality print-board. The intelligence board is a programmable logic device (PLD or FPGA) having a predetermined UDI, and an operating system embedded within it along with supporting devices such as memory, processor, or the like. The programmable chip further comprises an advance encryption scheme selected from AES 128 and / or AES 256, embedded therein for encrypting any authorization code generated for accessing the locks managed by the scanning apparatus. Preferably, the code may be generated using a code generating software using the UDI of the PLD. However, any known technique may be used to generate the authorization code. The connector board is further connected to a power feed board for providing power to the scanning unit. The power feed-board further comprises a relay switch for controlling an ON / OFF operation of the one or more connected locks. The scanner assembly further comprises at least one communication board connected to the connector board having a communication interface for enabling a communication with the connected locks. The at least one communication board may be connected to the connector board individually or in combination with other communication boards selected from one or more of but not limited to RS232, RS242, Bluetooth and / or WIMAX. It should be contemplated that in such a commercial application embodiment, all the known functional, structural components are provided without deviating from the scope of the invention. In use, when the user arrives near the scanning unit, the scanning gets activated and scans a barcode provided by the user. The scanning unit communicates the scanned barcode to the scanner assembly where the intelligence board decrypts it using selected AES scheme (AES 128 / AES 256). If the decrypted authorization code is verified for an access, the power feed board provides the power to the relay switch, which in turn send a command for the locks to be opened via one or more communication interface of the communication board.

Such a commercial execution enables the use of small size housing that can be conveniently mounted at any desired locations such as within letter boxes, private boxes and / or wall surface at the entry of houses and / or commercial buildings. Further, such an embodiment also provides highly secure access management due to the use of advance encryption scheme for encryption / decryption of the authorization code, thereby eliminating any possibility of frauds and / or unwanted access within the premises.

The scanning apparatus **100** may be used for managing and control of visitor's access at homes, hospitals, shops, institutions, or the like. Further, the scanning apparatus **100** may be used for various purpose such as verifying if visitors and / or objects accessing a designated site is compliant with rules set by an administrator and / or management for legitimate presence at the site. Additionally, with the presence of a real time clocking functionality, the scanning apparatus **100** may also be used for activities such as tracking system, and / or work reporting time clock across various organizations.

While the present invention is detailed with respect to access management, it is appreciated that the present invention is readily adapted to address other applications illustratively including tracking objects such as foodstuffs through the chain of production and retail, package delivery systems, drug dispensation in a medical facility setting, just-in-time manufacturing inventory management, and pre-cleared customs service operation.

Referring to FIG. 9 and 10, methodology in accordance with a non claimed embodiment. While, for purposes of simplicity of explanation, the methodology is shown and described as a series of acts, it is to be understood and appreciated that the claimed subject matter is not limited by the order of acts, as some acts may occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the claimed subject matter. Additionally, it should be further appreciated that the methodologies disclosed hereinafter and throughout this specification are capable of being stored on an article of manufacture to facilitate transporting and transferring such methodologies to computers. The term article of manufacture, as used herein, is intended to encompass a computer program accessible from any computer-readable device, carrier, or media.

## Claims

1. A modular scanning apparatus (10) for access management and for being operably connected to one or more locks (30) such that the scanning apparatus (10) scans an input from a user to open and provides access there through, the apparatus comprising:
a housing unit (20), the housing unit (20) comprising a top plane, a bottom plane, a front wall, a rear wall, and a pair of substantially opposing side walls defining an interior portion within wherein at least one of the walls comprises a cavity providing access to the interior portion;
a scanner assembly (12) placed within the housing unit (20), the scanner assembly (12) comprising:
a base scanner interface board (22);
a scanning unit (21) connected to the scanner interface board (22), the scanning unit (21) comprising a scanning portion extending out of the cavity;
a connector board (23) connected to the scanner interface board (22), the connector board (23) comprising a plurality of first kind of electronic connectors;
a power board connected to the connector board (23) for providing power to the scanning apparatus (10);
a plurality of removable individual functionality print-boards (24) connected to the connector board (23);
a holding mechanism for holding the scanner assembly (12) within the housing:
**characterized in that** the plurality of removeable individual functionality print-boards (24) are stacked on the top of each other wherein each of the individual functionality print-boards (24) is electronically connected to the connector board (23) at one or more of the plurality of first kind of electronic connectors via a one or more second kind of electronic connector, and **in that** the scanning unit (21) is placed in an angular position to be able to scan a substantially horizontal plane under an angle between 1° to 89° and preferably between 5° and 45°, and **in that** the apparatus (10) comprises a mounting mechanism for mounting the housing on a mounting surface.

2. The apparatus of claim 1, wherein the scanned input is one of a 2d barcode, QR code, matrix barcodes, and linear barcode.

3. The apparatus of claim 1, wherein the plurality of individual functionality print-board comprises an intelligence board connected to the connector board.

4. The apparatus of claim 3, wherein the intelligence board comprises one or more programmable logic configured to process a scanned input received from the scanning unit.

5. The apparatus of claim 4, wherein processing the scanned input comprises decrypting the scanned input.

6. The apparatus of claim 4, wherein the intelligence board is electrically connected to one or more of the other individual functionality print-boards for supporting an implementation using the programmable logic.

7. The apparatus of claim 1, wherein the first kind of electronic connector is complementarily connectable to the second kind of the electronic connector.

8. The apparatus of claim 1, wherein the first kind of electronic connector is a male pin header and the second kind of electronic connector is a female pin socket.

9. The apparatus of claim 1, wherein the individual functionality print-board comprises a sim-card slot board connected to the connector board.

10. The apparatus of claim 1, wherein the plurality of individual functionality print-board comprises a real time clock connected to the connector board.

11. The apparatus of claim 1, wherein the plurality of individual functionality print-board comprises a communication board for connecting the scanning apparatus to the one or more locks.

12. The apparatus of claim 11, wherein the scanning apparatus is connected to the one or more locks through a remote access management system.

13. The apparatus of claim 11, wherein the communication board is selected from RS232, RS485, RS422, Wiegand, 12C, ABA TK2, ISO2, wireless IEEE 802.15.4 (6Lowpan, ZigBee, Z-WAVE), Bluetooth, GPRS, WIMAX, WIFI .

14. The apparatus of claim 1, wherein the power board comprises a relay switch for providing a switching function to the one or more connected locks.

## Patentansprüche

1. Modulare Abtastungseinrichtung (10)
zur Zugriffverwaltung und um betriebsfähig mit einem Schloss oder mehreren Schlössern (30) verbunden zu sein, so dass die Abtastungseinrichtung (10) eine Eingabe von einem Anwender abtastet, um sich zu öffnen und Zugriff dadurch bereitzustellen, wobei die Einrichtung Folgendes umfasst:
eine Gehäuseeinheit (20), wobei die Gehäuseeinheit (20) eine Oberseitenebene, eine Bodenebene, eine Vorderwand, eine Rückwand und ein Paar im Wesentlichen gegenüberliegender Seitenwände, die einen Innenabschnitt darin definieren, umfasst, wobei mindestens eine der Wände einen Hohlraum umfasst, der Zugriff auf den Innenabschnitt bereitstellt;
eine Abtasteranordnung (12), die innerhalb der Gehäuseeinheit (20) platziert ist, wobei die Abtasteranordnung (12) Folgendes umfasst:
eine Basisabtasterschnittstellenplatine (22);
eine Abtastungseinheit (21), die mit der Abtasterschnittstellenplatine (22) verbunden ist, wobei die Abtastungseinheit (21) einen Abtastungsabschnitt umfasst, der sich aus dem Hohlraum erstreckt;
eine Verbinderplatine (23), die mit der Abtasterschnittstellenplatine (22) verbunden ist, wobei die Verbinderplatine (23) eine Vielzahl von elektronischen Verbindern einer ersten Art umfasst;
eine Leistungsplatine, die mit der Verbinderplatine (23) verbunden ist, um Leistung an die Abtastungseinrichtung (10) bereitzustellen;
eine Vielzahl abnehmbarer Druckplatinen (24) mit individueller Funktionalität, die mit der Verbinderplatine (23) verbunden sind;
einen Haltemechanismus zum Halten der Abtasteranordnung (12) innerhalb des Gehäuses;
**dadurch gekennzeichnet, dass** die Vielzahl abnehmbarer Druckplatinen (24) mit individueller Funktionalität aufeinander gestapelt sind, wobei jede der Druckplatinen (24) mit individueller Funktionalität elektronisch mit der Verbinderplatine (23) bei einem oder mehreren der Vielzahl von elektrischen Verbindern der ersten Art über einen oder mehrere elektronische Verbinder einer zweiten Art verbunden ist, und dadurch, dass die Abtastungseinheit (21) in einer abgewinkelten Position platziert ist, um im Stande zu sein, eine im Wesentlichen horizontale Ebene unter einem Winkel zwischen 1° und 89° und bevorzugt zwischen 5° und 45° abzutasten, und dadurch dass die Einrichtung (10) einen Befestigungsmechanismus umfasst, um das Gehäuse an einer Befestigungsoberfläche zu befestigen.

2. Einrichtung nach Anspruch 1, wobei die abgetastete Eingabe einer von einem 2d-Barcode, QR-Code, Matrixbarcodes und linearen Barcodes ist.

3. Einrichtung nach Anspruch 1, wobei die Vielzahl von Druckplatinen mit individueller Funktionalität eine Intelligenzplatine umfasst, die mit der Verbinderplatine verbunden ist.

4. Einrichtung nach Anspruch 3, wobei die Intelligenzplatine eine oder mehr programmierbare Logik umfasst, die konfiguriert ist, eine abgetastete Eingabe zu verarbeiten, die von der Abtastungseinheit empfangen wird.

5. Einrichtung nach Anspruch 4, wobei Verarbeiten der abgetasteten Eingabe umfasst, die abgetastete Eingabe zu entschlüsseln.

6. Einrichtung nach Anspruch 4, wobei die Intelligenzplatine elektrisch mit einer oder mehreren der anderen Druckplatinen mit individueller Funktionalität verbunden ist, um eine Implementierung unter Verwendung der programmierbaren Logik zu unterstützen.

7. Einrichtung nach Anspruch 1, wobei der elektronische Verbinder der ersten Art gegengleich mit dem elektronischen Verbinder der zweiten Art verbunden werden kann.

8. Einrichtung nach Anspruch 1, wobei der elektronische Verbindung ein Steckerkopf ist und der elektronische Verbinder der zweiten Art eine Steckerbuchse ist.

9. Einrichtung nach Anspruch 1, wobei die Druckplatine mit individueller Funktionalität eine Simkartenschachtplatine umfasst, die mit der Verbinderplatine verbunden ist.

10. Einrichtung nach Anspruch 1, wobei die Vielzahl von Druckplatinen mit individueller Funktionalität eine Echtzeituhr umfasst, die mit der Verbinderplatine verbunden ist.

11. Einrichtung nach Anspruch 1, wobei die Vielzahl von Druckplatinen mit individueller Funktionalität eine Kommunikationsplatine zum Verbinden der Abtastungseinrichtung mit dem einen Schloss oder den mehreren Schlössern umfasst.

12. Einrichtung nach Anspruch 11, wobei die Abtastungseinrichtung mit dem einen Schloss oder den mehreren Schlössern durch ein Fernzugriffsverwaltungssystem verbunden ist.

13. Einrichtung nach Anspruch 11, wobei die Kommunikationsplatine aus RS232, RS485, RS422, Wiegand, 12C, ABATK2, ISO2, drahtlosem IEEE 802.15.4 (6Lowpan, ZigBee, Z-WAVE), Bluetooth, GPRS, WIMAX, WIFI ausgewählt ist.

14. Einrichtung nach Anspruch 1, wobei die Leistungsplatine eine Relaisschaltung zum Bereitstellen einer Schaltfunktion an das eine verbundene Schloss oder die mehreren verbundenen Schlösser umfasst.

## Revendications

1. Appareil de balayage modulaire (10) pour une gestion d'accès et pour être relié de manière fonctionnelle à un ou plusieurs verrous (30) de telle sorte que l'appareil de balayage (10) balaie une entrée provenant d'un utilisateur à ouvrir et fournisse un accès par celle-ci, l'appareil comprenant :
une unité de boîtier (20), l'unité de boîtier (20) comprenant un plan supérieur, un plan inférieur, une paroi avant, une paroi arrière et une paire de parois latérales sensiblement opposées définissant une partie intérieure à l'intérieur de laquelle au moins l'une des parois comprend une cavité fournissant un accès à la partie intérieure ;
un ensemble dispositif de balayage (12) placé à l'intérieur de l'unité de boîtier (20), l'ensemble scanner (12) comprenant :
une carte d'interface de dispositif de balayage de base (22) ;
une unité de balayage (21) reliée à la carte d'interface de dispositif de balayage (22), l'unité de balayage (21) comprenant une partie de balayage s'étendant hors de la cavité ;
une carte de connecteur (23) reliée à la carte d'interface de dispositif de balayage (22), la carte de connecteur (23) comprenant une pluralité de connecteurs électroniques d'un premier type de connecteur électronique ;
une carte de puissance reliée à la carte de connecteur (23) pour fournir de l'énergie à l'appareil de balayage (10) ;
une pluralité de cartes imprimées de fonctionnalité individuelles amovibles (24) reliées à la carte de connecteur (23) ;
un mécanisme de maintien pour maintenir l'ensemble dispositif de balayage (12) à l'intérieur du boîtier ;
**caractérisé en ce que** la pluralité de cartes imprimées de fonctionnalité individuelles amovibles (24) sont empilées les unes sur les autres, dans lequel chacune des cartes imprimées de fonctionnalité individuelles (24) est reliée électroniquement à la carte de connecteur (23) au niveau d'un ou de plusieurs connecteurs électronique de la pluralité d'un premier type de connecteur électronique par le biais d'un ou de plusieurs connecteurs électroniques d'un second type de connecteur électronique et **en ce que** l'unité de balayage (21) est placée dans une position angulaire pour pouvoir balayer un plan sensiblement horizontal selon un angle entre 1° et 89° et, de préférence, entre 5° et 45° et **en ce que** l'appareil (10) comprend un mécanisme de montage pour monter le boîtier sur une surface de montage.

2. Appareil selon la revendication 1, dans lequel l'entrée balayée est l'un d'un code à barres 2D, d'un code QR, de codes à barres matriciel et d'un code à barres linéaire.

3. Appareil selon la revendication 1, dans lequel la pluralité de cartes imprimées de fonctionnalité individuelles comprend une carte d'intelligence reliée à la carte de connecteur.

4. Appareil selon la revendication 3, dans lequel la carte d'intelligence comprend une ou plusieurs logiques programmables configurées pour traiter une entrée balayée reçue de l'unité de balayage.

5. Appareil selon la revendication 4, dans lequel le traitement de l'entrée balayée comprend le décryptage de l'entrée balayée.

6. Appareil selon la revendication 4, dans lequel la carte d'intelligence est reliée électroniquement à une ou plusieurs des autres cartes imprimées de fonctionnalité individuelles pour prendre en charge une mise en oeuvre à l'aide de la logique programmable.

7. Appareil selon la revendication 1, dans lequel le premier type de connecteur électronique peut être relié de manière complémentaire au second type de connecteur électronique.

8. Appareil selon la revendication 1, dans lequel le premier type de connecteur électronique est une barrette à broches mâle et le second type de connecteur électronique est un support à broches femelle.

9. Appareil selon la revendication 1, dans lequel la carte imprimée de fonctionnalité individuelle comprend une carte à fente de carte SIM reliée à la carte de connecteur.

10. Appareil selon la revendication 1, dans lequel la pluralité de la cartes imprimées de fonctionnalité individuelles comprend une horloge en temps réel reliée à la carte de connecteur.

11. Appareil selon la revendication 1, dans lequel la pluralité de la cartes imprimées de fonctionnalité individuelles comprend une carte de communication pour relier l'appareil de balayage à les un ou plusieurs verrous.

12. Appareil selon la revendication 11, dans lequel l'appareil de balayage est relié à les un ou plusieurs verrous au moyen d'un système de gestion d'accès à distance.

13. Appareil selon la revendication 11, dans lequel la carte de communication est sélectionnée parmi RS232, RS485, RS422, Wiegand, 12C, ABA TK2, ISO2, IEEE 802.15.4 sans fil (6Lowpan, ZigBee, Z-WAVE), Bluetooth, GPRS, WIMAX, WIFI.

14. Appareil selon la revendication 1, dans lequel la carte de puissance comprend un commutateur à relais pour fournir une fonction de commutation à les un ou plusieurs verrous connectés.
